# EUROPÄISCHE PATENTSCHRIFT

(11) **EP 2 813 696 B1**
(45) Veröffentlichungstag und Bekanntmachung des Hinweises auf die Patenterteilung: **02.12.2015**
(21) Anmeldenummer: 14163111.9
(22) Anmeldetag: 12.06.2013
(51) Int. Cl.: F02K 1/00, F02K 1/12

(54) **Schubumlenkvorrichtung sowie Flugtriebwerk**
Thrust vectoring device and aircraft engine comprising the same
Dispositif de déviation de poussée et moteur d'avion avec ce dispositif

(43) Veröffentlichungstag der Anmeldung: 17.12.2014
(62) Teilanmeldung aus: 13171602.9
(73) Patentinhaber: MTU Aero Engines AG, 80995 München (DE)
(72) Erfinder: Klingels, Hermann, 85221 Dachau (DE); Dr. Klän, Stephan, 80469 München (DE); Scherer, Christian, 85244 Röhrmoos (DE); Vogel, Uwe, 80939 München (DE)

(56) Entgegenhaltungen:
- DE-A1- 4 426 195
- DE-A1-102006 031 625
- US-A- 5 687 907
- US-A- 5 769 317
- US-B1- 6 318 668

## Beschreibung

Die Erfindung betrifft eine Schubumlenkvorrichtung nach dem Oberbegriff des Patentanspruchs 1 und ein Flugtriebwerk.

Flugtriebwerke im militärischen Bereich weisen zur Erhöhung einer Flugmanövrierbarkeit regelmäßig eine Schubumlenkvorrichtung auf, mittels der ein Schubstrahl in Nickrichtung und Gierrichtung umgelenkt wird. Eine beispielhafte Schubumlenkvorrichtung ist in der US 4,978,071 A gezeigt. Diese Schubumlenkvorrichtung hat ein Gehäuse zum Übergang von einem runden Austrittsquerschnitt auf einen rechteckigen Austrittsquerschnitt. Zum Umlenken des Schubstrahls in Nickrichtung und Gierrichtung weist die Schubumlenkvorrichtung zwei orthogonal zueinander angeordnete seitliche Klappenpaare auf. Ähnliche Schubumlenkvorrichtungen sind in der US 4,836,451 A, US 5,687,907 A und der US 4,848,664 A gezeigt, bei der ebenfalls mittels orthogonal zueinander angeordneten seitlichen Klappenpaaren ein Schubstrahl in Nickrichtung oder Gierrichtung umgelenkt wird. Aus der DE 10 2006 031 625 A1 ist zudem eine Vorrichtung zur Giersteuerung einer Düse mit rechteckigem Austrittsquerschnitt bekannt. Aus der US 5,769,317 A ist eine Schubumlenkvorrichtung bekannt, bei der eine Umlenkung eines Schubstrahls in Nickrichtung durch Verschwenkung einer Düse um eine Querachse und eine Umlenkung des Schubstrahls in Gierrichtung durch ein sich von der Düse stromabwärts erstreckendes vertikales Klappenpaar erfolgt. Nachteilig bei diesen bekannten Schubumlenkvorrichtungen ist aufwendige mechanische Konstruktion zum Ansteuern bzw. Bewegen der Klappenpaare bzw. der Düse.

Aufgabe der Erfindung ist es, eine Schubumlenkvorrichtung zu schaffen, die das vorgenannte Nachteil beseitigt und eine Umlenkung eines Schubstrahls in Nick- und Gierrichtung bei vereinfachter Konstruktion ermöglicht. Zudem ist es Aufgabe der Erfindung, ein Flugtriebwerk mit einer derartigen Schubumlenkvorrichtung zu schaffen.

Diese Aufgabe wird gelöst durch eine Schubumlenkvorrichtung mit den Merkmalen des Patentanspruchs 1 und durch ein Flugtriebwerk mit den Merkmalen des Patentanspruchs 8.

Eine erfindungsgemäße Schubumlenkvorrichtung zum Umlenken eines Schubstrahls eines Flugtriebwerks hat ein Gehäuse, vorzugsweise zum Übergang von einem kreisförmigen Querschnitt auf einen eckigen Austrittsquerschnitt, und eine Klappenanordnung mit einer Vielzahl von Ablenkklappen, die jeweils um ihre Hochachse verschwenkbar sind, die sich orthogonal zur Querachse der Schubumlenkvorrichtung erstreckt. Erfindungsgemäß ist die Klappenanordnung zwischen parallelen Leitflächen angeordnet, die sich stromabwärts des Gehäuses erstrecken und die zusammen mit der Klappenanordnung um eine in Richtung der Querachse verlaufende Schwenkachse zum Umlenken des Schubstrahls in Nickrichtung verschwenkbar sind.

Durch die Anordnung der Klappenanordnung zwischen den sich in Querrichtung der Schubumlenkvorrichtung erstreckenden Leitblechen wird eine kastenartige Struktur geschaffen, die mittels ihrer Verschwenkbarkeit in Nickrichtung eine Vektorisierung um die Nickachse ermöglicht. Eine Vektorisierung um die Gierachse erfolgt mittels der um ihre Hochachsen verschwenkbaren Ablenkklappen der Klappenanordnung. Somit wird mittels der erfindungsgemäßen Schubumlenkvorrichtung eine effektive Schubvektorisierung mit einer im Vergleich zum Stand der Technik vereinfachten Konstruktion geschaffen.

Bevorzugterweise sind die Ablenkklappen gleichmäßig verteilt und beidseitig einer Längsachse der Schubumlenkvorrichtung angeordnet, wobei die Ablenkklappen auf der einen Seite gegensinnig zu den Ablenkklappen auf der anderen Seite verschwenkbar sind. Durch die gegensinnige Verstellung können Austrittsteilquerschnitte, die von den jeweils benachbarten Ablenklappen begrenzt werden, verändert werden, so dass die Klappenanordnung nicht nur zur Umlenkung des Schubstrahls in Gierrichtung, sondern ebenfalls eine Flächenverstellung des Schubstrahls ermöglicht.

Eine technisch robuste Konstruktion der Ablenkklappen lässt sich dadurch erreichen, dass diese über eine translatorische Bewegung eines Aktuators, beispielsweise in Längsrichtung der Schubumlenkvorrichtung, erfolgt.

Die Robustheit der Konstruktion und somit der Schubumlenkvorrichtung lässt sich bei geringer Komplexität erhöhen, wenn eine gleichsinnige Verstellung der Ablenkklappen zur Umlenkung des Schubstrahls in Gierrichtung über eine translatorische Querbewegung eines den Aktuator aufnehmenden Stellgehäuses erfolgt. Zur Umlenkung des Schubstrahls in Gierrichtung und zur Flächenverstellung werden somit lediglich zwei gerade Bewegungen überlagert, die bevorzugterweise senkrecht zueinander stehen.

Bei einem bevorzugten technisch robusten Ausführungsbeispiel ist die Aktuator an einem in dem Stellgehäuse in Längsrichtung verschiebbar gelagerten Schiebeteller angelenkt, der über jeweils ein Hebelwerk mit den Ablenkklappen einer Seite in Wirkverbindung steht, wobei die Hebelwerke jeweils einen Schwenkkörper umfassen, der um eine Vertikalachse verschwenkbar ist, die sich parallel zur Hochachse der Ablenkklappen erstreckt und von dem sich Gelenkstangen zu jeweils einer der Ablenkklappen erstrecken. Eine derartige Konstruktion ermöglicht bei einer minimalen Teileanzahl eine Umlenkung des Schubstrahls in Gierrichtung als auch eine Flächenverstellung.

Um die auf die Gelenkstangen wirkenden Kräfte zur Verstellung der Ablenkklappen gering zu halten bzw. um mit geringen Kräften eine sensible Verstellung der Ablenkklappen zu erreichen, können die Gelenkstangen an Armen angelenkt sein, die sich von einem vorderen Bereich der Ablenkklappen stromabwärts erstrecken.

Ein erfindungsgemäßes Flugtriebwerk weist eine erfindungsgemäße Schubumlenkvorrichtung mit einer effektiven Kombination von Schubvektorisierung und Flächenverstellung in eckiger Düse mit großem Steckungsverhältnis auf.

Sonstige vorteilhafte Ausführungsbeispiel der Erfindung sind Gegenstand weiterer Unteransprüche.

Im Folgenden wir eine bevorzugtes Ausführungsbeispiel der Erfindung anhand schematischer Darstellungen näher erläutert. Es zeigen:
- Figur 1: einen Längsschnitt durch ein erfindungsgemäßes Flugtriebwerk,
- Figur 2: eine perspektivische Detaildarstellung einer erfindungsgemäßen Schubumlenkvorrichtung,
- Figur 3: eine Draufsicht auf eine Klappenanordnung der erfindungsgemäßen Schubumlenkvorrichtung in einer Ruheposition, und
- Figur 4: eine Draufsicht auf die Klappenanordnung in einer Arbeitsposition.

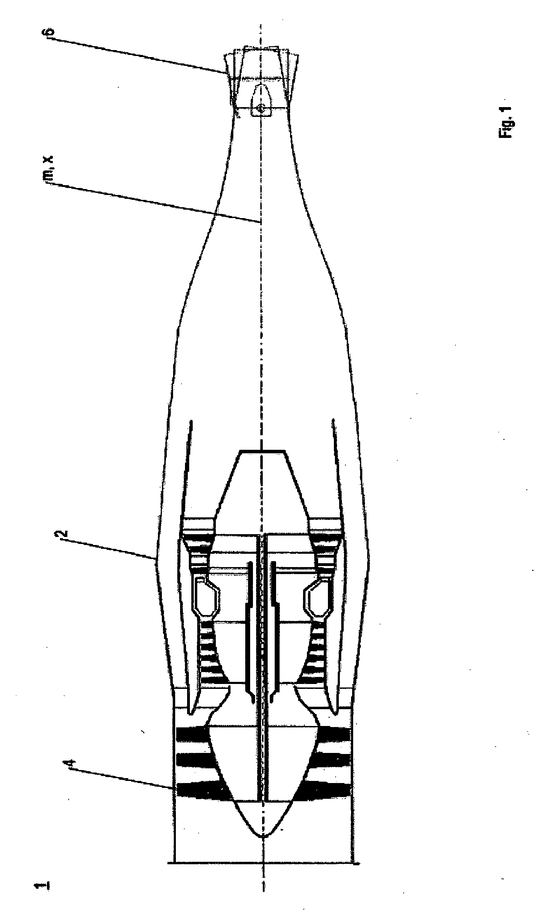

Gemäß der Darstellung in Figur 1 hat ein erfindungsgemäßes Flugtriebwerk 1 ein Mantelgehäuse 2, in dem einlassseitig beispielsweise ein Fan 4 und auslassseitig eine erfindungsgemäße Schubumlenkvomchtung 6 zum Umlenken eines aus dem Flugtriebwerk 1 austretenden Schubstrahls angeordnet ist. Die Schubumlenkvorrichtung 6 liegt mit ihrer Längsachse x auf einer Triebwerksmittelachse m und wird mittels eines nicht gezeigten Motorantriebs betätigt.

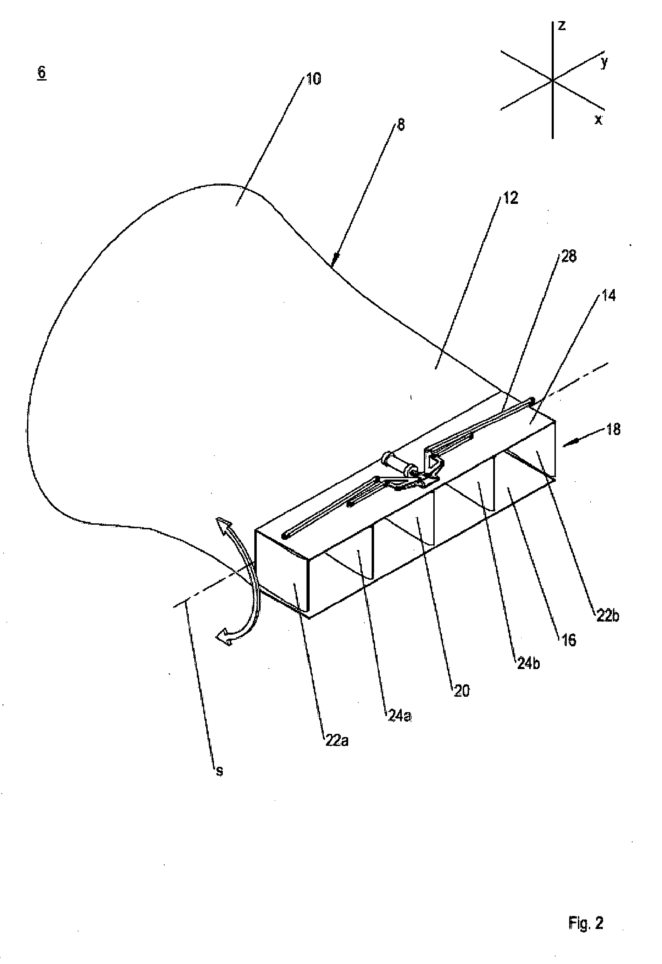

Gemäß der Einzeldarstellung in Figur 2 hat die Schubumlenkvorrichtung ein Gehäuse 8 mit einem vorderen zylinderförmigen Gehäuseabschnitt 10 und einem hinteren rechteckigen Gehäuseabschnitt 12. Die Schubumlenkvorrichtung 6 wird mittels des vorderen Gehäuseabschnitts 10 an dem Mantelgehäuse 2 befestigt, so dass der in das Gehäuse 8 eintretende Schubstrahl von einem kreisförmigen Querschnitt in einen eckigen Austrittsquerschnitt und insbesondere in einen rechteckigen Austrittsquerschnitt überführt wird. Der hintere Gehäuseabschnitt 12 hat eine größere Erstreckung in Richtung einer Querachse y der Schubumlenkvorrichtung 6 als in Richtung einer Hochachse z der Schubumlenkvorrichtung 6, so dass der rechteckige bzw. hintere Gehäusequerschnitt 12 bei horizontaler Ausrichtung des Flugtriebwerks liegend ausgebildet ist.

Zudem hat die Schubumlenkvorrichtung 6 zwei parallele Leitbleche 14, 16. Die Leitbleche 14, 16 erstrecken sich stromabwärts des hinteren Gehäuseabschnitts 12 und haben die gleiche Erstreckung in Querrichtung wie der hintere Gehäuseabschnitt 12. In Hochrichtung der Schubumlenkvorrichtung 6 sind die Leitbleche 14, 16 voneinander beabstandet.

Des Weiteren hat die Schubumlenkvorrichtung 6 eine Klappenanordnung 18. Die Klappenanordnung 18 ist zwischen den Leitblechen 14, 16 angeordnet und bildet mit dieser eine kastenartige Struktur bzw. Rechteckdüse. In dem gezeigten Ausführungsbeispiel hat die Klappenanordnung 18 fünf Ablenkklappen 20, 22a, 22b, 24a, 24b, die in Querrichtung gleichmäßig voneinander beabstandet sind. Bevorzguterweise stehen die Ablenkklappen 20, 22a, 22b, 24a, 24b in Längsrichtung nicht über die Leitbleche 14, 16 hervor, sondern sind vollständig zwischen diesen angeordnet.

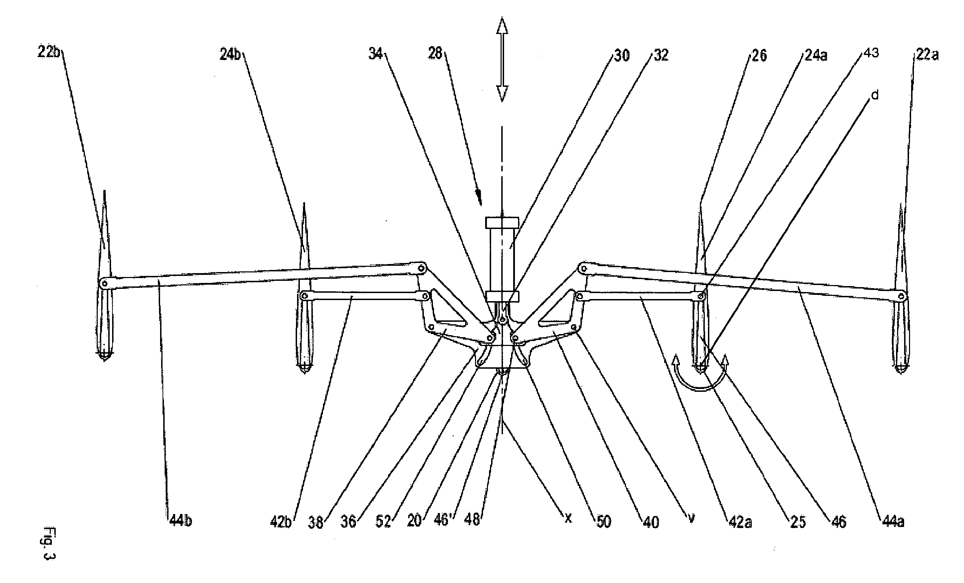

Wie in Figur 3 gezeigt, sind die Ablenkklappen 20, 22a, 22b, 24a, 24b jeweils um eine sich in Hochrichtung erstreckende Hochachse bzw. Drehachse d verschwenkbar zwischen den Leitblechen 14, 16 gelagert. Insbesondere hat die Klappenanordnung 18 in dem gezeigten Ausführungsbeispiel eine auf der Längsachse x liegende innere Ablenkklappe 20, zwei seitliche äußere Ablenkklappen 22a, 22b sowie zwei seitliche zwischen der inneren Ablenkklappe 20 und den äußeren Ablenkklappen 22a, 22b angeordnete mittlere Ablenkklappen 24a, 24b. Die Ablenkklappen 20, 22a, 22b, 24a, 24b sind in Querrichtung gleichmäßig voneinander beabstandet, wobei die beiden äußeren Ablenkklappen 24a, 24b quasi Seitenwände der kastenartigen Struktur bilden (siehe Figur 2). Die Ablenkklappen 20, 22a, 22b, 24a, 24b haben jeweils ein flügelartiges Profil mit einer Anströmkante bzw. Vorderkante 25 und einer Abströmkante bzw. Hinterkante 26. Zwei benachbarte Ablenkklappen 20, 24a bzw. 20, 24b bzw. 24a, 22a bzw. 24b, 22b begrenzen jeweils einen rechteckigen Austrittsteilquerschnitt. Die Summe der Austrittsteilquerschnitte ergibt den vorgenannten rechteckigen Austrittsquerschnitt der Schubumlenkvorrichtung 6 bzw. des Flugtriebwerks 1.

Zum Umlenken bzw. Vektorisieren des Schubstrahls in Nickrichtung ist die kastenartige Struktur bestehend aus den Leitblechen 14, 16 und der Klappenanordnung 18 wie durch den Doppelfpeil in der Figur 2 angedeutet um eine parallel zur Querachse y verlaufende Schwenkachse s verschwenkbar.

Zur Flächenverstellung des Schubstrahls und somit zum Verändern des Austrittsquerschnittes bzw. der Austrittsteilquerschnitte sowie zum Umlenken des Schubstrahls in Gierrichtung weist die Schubumlenkvorrichtung 6 eine Verstelleinrichtung 28 zum Verstellen der Ablenkklappen 20, 22a, 22b, 24a, 24b um ihre Drehachsen d auf.

Wie in Figur 3 gezeigt, hat die Verstelleinrichtung 28 einen in Längsrichtung translatorisch verfahrbaren Aktuator 30, der mit dem Motorantrieb verbunden ist und der über eine Axialstange 32 auf einen Schiebeteller 34 wirkt. Der Schiebeteller 34 ist ein einem Stellgehäuse 36 angeordnet und steht durch Hebelwerke mit den Ablenklappen 20, 22a, 22b, 24a, 24 in mechanischer Wirkverbindung.

Die beiden Hebelwerke zum Ansteueren der seitlichen Ablenkklappen 22a, 22b, 24a, 24b umfassen jeweils einen Schwenkkörper 38, 40, die gegenüberliegend zur Längsachse x angeordnet sind und jeweils um eine Vertikalachse v verschwenkbar in dem Stellgehäuse 36 gelagert sind, die sich parallel zu den Drehachsen d erstreckt. Die Schwenkkörper 38, 40 haben jeweils eine dreieckförmige Gestalt mit zwei gleich langen Schenkeln, von denen der eine Schenkel außerhalb des Stellgehäuses 36 (äußerer Schenkel) und der andere Schenkel innerhalb des Stellgehäuses 36 angeordnet ist (innerer Schenkel). Die Vertikalachse v verläuft dabei im Kreuzungspunkt dieser beiden Schenkel.

An dem jeweils äußeren Schenkel der Schwenkkörper 38, 40 sind zwei Gelenkstangen 42a, 42b, 44a, 44b angeordnet, die sich zu jeweils einer der seitlich Ablenkklappen 22a, 22b, 24a, 24b erstrecken und an dieser angelenkt sind. Zur Anbindung der Gelenkstangen 42a, 42b, 44a, 44b haben die Ablenkklappen 22a, 22b, 24a, 24b jeweils einen Arm 46, der in einem vorderen Ablenkklappenbereich nahe der Vorderkanten 25 befestigt ist und sich stromabwärts erstreckt. In dem gezeigten Ausführungsbeispiel erstrecken sich die Arme 46 bis zu Gelenkpunkten 43 der Gelenkstangen 42a, 42b, 44a, 44b.

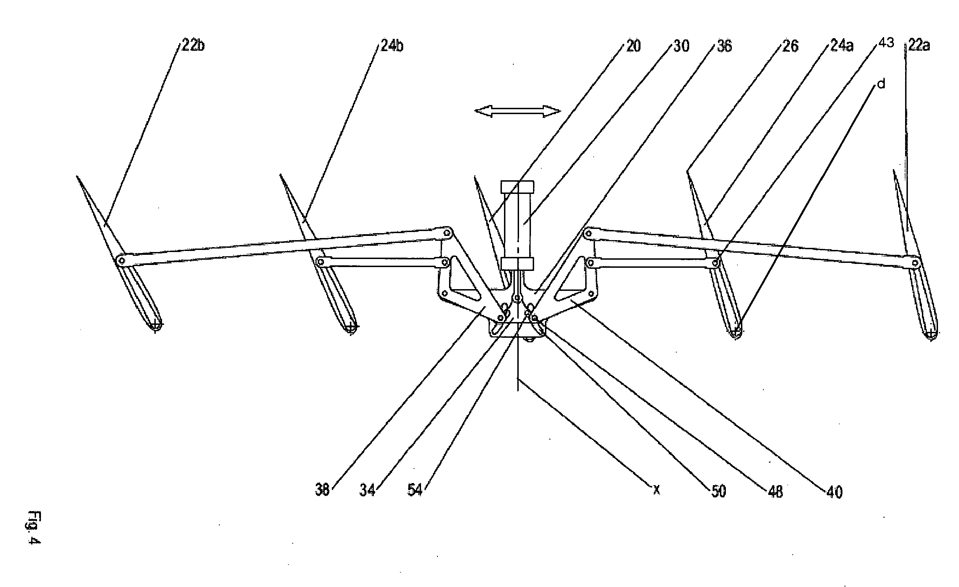

Der jeweils innere Schenkel der Schwenkkörper 38, 40 wirkt endseitig mit einem Führungsstift 48 zusammen. Der Führungsstift 48 ist in jeweils einer stellgehäuseseitigen Führungsbahn 50, 52 geführt, wobei er sich durch einen in Figur 4 sichtbaren Durchbruch 54 des Schiebetellers 34 erstreckt. Die Führungsbahnen 50, 52 haben einen bogenartigen Verlauf, wobei sie mit ihren konvexen Seiten einander zugewandt sind.

Ein Hebelwerk zur Ansteuerung der inneren Ablenkklappe 20 ist in der gezeigten Draufsicht nicht zu erkennen. Somit ist auch eine am Arm 46' der inneren Ablenkklappe 20 angreifende Gelenkstange in der gezeigten Draufsicht nicht zu erkennen.

Bei einer in Figur 3 durch den geraden Doppelpfeil angedeuteten translatorischen Bewegung des Aktuators 30 in Längsrichtung wird der Schiebeteller 34 mitgenommen und die Schwenkkörper 38, 40 werden jeweils um ihre Vertikalachse v verschwenkt. Je nach der Richtung der translatorischen Längsbewegung des Aktuators 30 werden wie durch den gebogenen Doppelpfeil angedeutet die Hinterkanten 26 der seitlichen Ablenkklappen 22a, 22b, 24a, 24b zur Längsachse x hingedreht oder von der Längsachse x weggedreht. Bei einer translatorischen Bewegung des Aktuators 30 werden die seitlichen Ablenkklappen 22a, 24a auf der einen Seite also gegensinnig zu den Ablenkklappen 22b, 24b auf der anderen Seite verschwenkt. Die Position der inneren Ablenkklappe 20 bleibt unverändert. Die gegensinnige Verstellung der Hinterkanten 26 zur bzw. von der Längsachse x weg bewirkt einer Verkleinerung bzw. Vergrößerung der Austrittsteilquerschnitte und somit eine Verstellung des Austrittsquerschnittes der Schubumlenkvorrichtung 6.

Zum Umlenken bzw. Vektorisieren des Schubstrahls in Gierrichtung wird das Stellgehäuse 36 wie in Figur 4 durch den Doppelpfeil angedeutet in Querrichtung translatorisch verfahren. Durch die translatorische Querbewegung des Stellgehäuses 36 und somit des Schwenkkörpers 38, 40 werden die Hinterkanten 26 sämtlicher Ablenkklappen 20, 22a, 22b, 24a, 24b um ihre jeweilige Drehachse d verschwenkt. Der Aktuator 30 wird aufgrund seiner Wirkverbindung mit dem Schiebeteller 34 mitgenommen, wobei bei Überlagerung dieser Querbewegung durch eine Aktuatorbewegung in Längsrichtung zusätzlich eine Flächenverstellung erfolgt.

Offenbart ist eine Schubumlenkvorrichtung zum Umlenken eines Schubstrahls mit einer Klappenanordnung mit einer Vielzahl von Ablenkklappen, die jeweils um ihre Hochachse verschwenkbar sind, wobei die Klappenanordnung zwischen parallelen Leitflächen angeordnet ist, die zusammen mit der Klappenanordnung eine Kastenstruktur bilden, die um eine in Richtung der Querachse verlaufende Schwenkachse verschwenkbar ist, sowie ein Flugtriebwerk.

### Bezugszeichenliste

- 1: Flugtriebwerk
- 2: Mantelgehäuse
- 4: Fan einlassseitig
- 6: Schubumlenkvorrichtung
- 8: Gehäuse
- 10: vorderer Gehäuseabschnitt
- 12: hinterer Gehäuseabschnitt
- 14: Leitblech
- 16: Leitblech
- 18: Klappenanordnung
- 20: innere Ablenkklappe
- 22a, b: äußere Ablenkklappe
- 24a, b: mittlere Ablenkklappe
- 25: Vorderkante
- 26: Hinterkante
- 28: Verstelleinrichtung
- 30: Aktuator
- 32: Axialstange
- 34: Schiebeteller
- 36: Stellgehäuse
- 38: Schwenkkörper
- 40: Schwenkkörper
- 42a, b: Gelenkstangen
- 43: Gelenkpunkte
- 44a, b: Gelenkstangen
- 46, 46': Arm
- 48: Führungsstift
- 50: Führungsbahn
- 52: Führungsbahn
- 54: Durchbruch

- d: Drehachse / Hochachse der Ablenkklappen
- m: Triebwerksmittelachse
- s: Schwenkachse
- v: Vertikalachse
- x: Längsachse
- y: Querachse
- z: Hochachse

## Patentansprüche

1. Schubumlenkvorrichtung (6) zum Umlenken eines Schubstrahls eines Flugtriebwerks (1), mit einem Gehäuse (8) und mit einer Klappenanordnung (18) mit einer Vielzahl von Ablenkklappen (20, 22a, 22b, 24a, 24b), die jeweils um ihre Hochachse (d) verschwenkbar sind, die sich orthogonal zur Querachse (y) der Schubumkehrvorrichtung erstreckt, **dadurch gekennzeichnet, dass** die Klappenanordnung (18) zwischen parallelen Leitblechen (14, 16) angeordnet ist, die sich stromabwärts des Gehäuses (8) erstrecken und die zusammen mit der Klappenanordnung (18) um eine in Richtung der Querachse (y) verlaufende Schwenkachse (s) zum Umlenken des Schubstrahls in Nickrichtung verschwenkbar sind.

2. Schubumlenkvorrichtung nach Anspruch 1, wobei das Gehäuse (8) einen Übergang von einem kreisförmigen Querschnitt auf einen eckigen Austrittsquerschnitt aufweist.

3. Schubumlenkvorrichtung nach Anspruch 1 oder 2, wobei die Ablenkklappen (20, 22a, 22b, 24a, 24b) gleichmäßig verteilt beidseits einer Längsachse (x) der Schubumlenkvorrichtung (6) angeordnet sind und die Ablenkklappen (22a, 24a) auf der einen Seite gegensinnig zu den Ablenkklappen (24b, 24b) auf der anderen Seite verschwenkbar sind.

4. Schubumlenkvorrichtung nach Anspruch 3, wobei die gegensinnige Verstellung der Ablenkklappen (22a, 22b,24a,24b), über eine translatorische Bewegung eines Aktuators (30) erfolgt.

5. Schubumlenkvorrichtung nach Anspruch 4, wobei eine gleichsinnige Verstellung der Ablenkklappen (20, 22a, 22b, 24a, 24b) über eine translatorische Querbewegung eines den Aktuator (30) aufnehmenden Stellgehäuses (36) erfolgt.

6. Schubumlenkvorrichtung nach Anspruch 4 oder 5, wobei der Aktuator (30) an einem in dem Stellgehäuse (36) in Längsrichtung verschiebbar gelagerten Schiebeteller (34) angelenkt ist, der über jeweils ein Hebelwerk mit den Ablenkklappen (20, 22a, 22b, 24a, 24b) einer Seite in Wirkverbindung steht, wobei die Hebelwerke jeweils einen Schwenkkörper (38, 40) umfassen, der um eine Vertikalachse (v) verschwenkbar ist, die sich parallel zur Hochachse (d) der Ablenkklappen (20, 22a, 22b,24a,24b) erstreckt, und von dem sich Gelenkstangen (42a, 42b, 44a, 44b) zu jeweils einer der Ablenkklappen (20, 22a, 22b, 24a, 24b) erstrecken.

7. Schubumlenkvorrichtung nach Anspruch 6, wobei die Gelenkstangen an Armen (46, 46') angelenkt sind, die sich von einem vorderen Bereich der Ablenkklappen (20, 22a, 22b, 24a, 24b) stromabwärts erstrecken.

8. Flugtriebwerk (1) mit einer Schubumlenkvorrichtung (6) nach einem der vorhergehenden Ansprüche.

## Claims

1. Thrust vectoring device (6) for the vectoring of a thrust stream of an aircraft engine (1), having a housing (8) and having a cover arrangement (18) with a plurality of vectoring covers (20, 22a, 22b, 24a, 24b) which are respectively able to be swivelled around their yaw axis (d) which extends orthogonally to the transverse axis (y) of the thrust vectoring device, **characterised in that** the cover arrangement (18) is arranged between parallel guiding plates (14, 16) which extend downstream of the housing (8) and which are able to be swivelled together with the cover arrangement (18) around a swivel axis (s) running in the direction of the transverse axis (y) for the vectoring of the thrust stream in the pitch direction.

2. Thrust vectoring device according to claim 1, wherein the housing (8) has a transition from a circular cross section to an angular outlet cross section.

3. Thrust vectoring device according to claim 1 or 2, wherein the vectoring covers (20, 22a, 22b, 24a, 24b) are arranged so as to be equally distributed on both sides of a longitudinal axis (x) of the thrust vectoring device (6) and the vectoring covers (22a, 24a) on one side are able to be swivelled in the opposite direction to the vectoring covers (24b, 24b) on the other side.

4. Thrust vectoring device according to claim 3, wherein the adjustment of the vectoring covers (22a, 22b, 24a, 24b) in the opposite direction takes place via a translational movement of an actuator (30).

5. Thrust vectoring device according to claim 4, wherein an adjustment of the vectoring covers (20, 22a, 22b, 24a, 24b) in the same direction takes place via a translational transverse movement of an adjustment housing (36) receiving the actuator (30).

6. Thrust vectoring device according to claim 4 or 5, wherein the actuator (30) is pivoted on a sliding plate (34) which is mounted so as to be able to be swivelled in the longitudinal direction in the adjustment housing (36), said plate being in operative connection via a respective lever mechanism with the vectoring covers (20, 22a, 22b, 24a, 24b) on one side, wherein the lever mechanisms each comprise one swivel head (38, 40) which is able to be swivelled around a vertical axis (v) which extends parallel to the yaw axis (d) of the vectoring covers (20, 22a, 22b, 24a, 24b) and from which joint rods (42a, 42b, 44a, 44b) extend respectively to one of the vectoring covers (20, 22a, 22b, 24a, 24b).

7. Thrust vectoring device according to claim 6, wherein the joint rods are pivoted on arms (46, 46') which extend downstream from a front region of the vectoring covers (20, 22a, 22b, 24a, 24b).

8. Aircraft engine (1) having a thrust vectoring device (6) according to one of the preceding claims.

## Revendications

1. Dispositif de déviation de poussée (6) destiné à dévier un jet de poussée d'un réacteur d'avion (1), avec un carter (8) et avec un ensemble d'ailettes (18) comprenant une pluralité d'ailettes de déviation (20, 22a, 22b, 24a, 24b) pouvant pivoter chacune autour de son axe vertical (d) et s'étendant orthogonalement à l'axe transversale (y) du dispositif de déviation de poussée, **caractérisé en ce que** l'ensemble d'ailettes (18) est disposé entre des plaques déflectrices (14, 16) parallèles qui s'étendent en aval du carter (8) et sont pivotantes avec l'ensemble d'ailettes (18) autour d'un axe de pivotement (s) s'étendant dans la direction de l'axe transversale (y) pour dévier le jet de poussée en direction de tangage.

2. Dispositif de déviation de poussée selon la revendication 1, où le carter (8) présente une transition d'une section transversale circulaire à une section transversale de sortie polygonale.

3. Dispositif de déviation de poussée selon la revendication 1 ou 2, où les ailettes de déviation (20, 22a, 22b, 24a, 24b) sont régulièrement réparties de part et d'autre d'un axe longitudinal (x) du dispositif de déviation de poussée (6), et où les ailettes de déviation (22a, 24a) sur le premier côté sont pivotantes dans le sens contraire des ailettes de déviation (24b, 24b) sur l'autre côté.

4. Dispositif de déviation de poussée selon la revendication 3, où le déplacement contraire des ailettes de déviation (22a, 22b, 24a, 24b) est obtenu par un mouvement de translation d'un actionneur (30).

5. Dispositif de déviation de poussée selon la revendication 4, où un déplacement dans le même sens des ailettes de déviation (20, 22a, 22b, 24a, 24b) est obtenu par un mouvement de translation transversal d'un boîtier de réglage (36) où est logé l'actionneur (30).

6. Dispositif de déviation de poussée selon la revendication 4 ou 5, où l'actionneur (30) est articulé sur un plateau de poussée (34) mobile longitudinalement dans le boîtier de réglage (36), lequel est en liaison active avec les ailettes de déviation (20, 22a, 22b, 24a, 24b) d'un côté au moyen d'un système de levier respectif, les systèmes de levier comprenant chacun un corps de pivotement (38, 40) pivotant autour d'un axe vertical (v) et s'étendant parallèlement à l'axe vertical (d) des ailettes de déviation (20, 22a, 22b, 24a, 24b), et à partir duquel s'étendent des bielles articulées (42a, 42b, 44a, 44b) vers des ailettes de déviation (20, 22a, 22b, 24a, 24b) respectives.

7. Dispositif de déviation de poussée selon la revendication 6, où les bielles articulées sont articulées sur des bras (46, 46') qui s'étendent en aval depuis une partie avant des ailettes de déviation (20, 22a, 22b, 24a, 24b).

8. Réacteur d'avion (1) comprenant un dispositif de déviation de poussée (6) selon l'une des revendications précédentes.
